(19) Europäisches Patentamt
European Patent Office
Office européen des brevets

(11) **EP 3 778 501 A1**

(12) **EUROPEAN PATENT APPLICATION**
published in accordance with Art. 153(4) EPC

(43) Date of publication:
**17.02.2021 Bulletin 2021/07**

(21) Application number: **19784941.7**

(22) Date of filing: **12.04.2019**

(51) Int Cl.:
*C02F 3/34* (2006.01)   *C02F 3/10* (2006.01)
*C02F 3/12* (2006.01)

(86) International application number:
**PCT/JP2019/015897**

(87) International publication number:
**WO 2019/198803 (17.10.2019 Gazette 2019/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.04.2018 JP 2018078031**

(71) Applicant: **Kuraray Co., Ltd.
Kurashiki-shi, Okayama 710-0801 (JP)**

(72) Inventors:
• **YOSHIHARA, Mototsugu
Saijo-shi, Ehime 793-8585 (JP)**
• **UCHINAGA, Kensuke
Kurashiki-shi, Okayama 713-8550 (JP)**
• **UKAI, Yu
Saijo-shi, Ehime 793-8585 (JP)**
• **OKABE, Hidehiko
Saijo-shi, Ehime 793-8585 (JP)**

(74) Representative: **Müller-Boré & Partner
Patentanwälte PartG mbB
Friedenheimer Brücke 21
80639 München (DE)**

(54) **WASTEWATER TREATMENT METHOD**

(57)     There is provided a process for treating wastewater comprising: Step 1 of feeding organic wastewater to a first aerobic tank and an anoxic tank; Step 2 of nitrifying and denitrifying the organic wastewater by bacteria supported on carriers in the first aerobic tank followed by discharging primary treated water; Step 3 of denitrifying the organic wastewater and the primary treated water by bacteria in an activated sludge in the anoxic tank followed by discharging secondary treated water; Step 4 of nitrifying the secondary treated water by bacteria in an activated sludge in the second aerobic tank followed by discharging tertiary treated water; and Step 5 of separating the sludge from the tertiary treated water in the solid-liquid separator followed by discharging final treated water while returning the sludge to the anoxic tank. According to this process, a load in a latter anoxic tank can be reduced, the anoxic tank can be downsized compared with the prior process and treated water with good water quality can be stably provided.

[FIG. 1]

**Description**

TECHNICAL FIELD

The present invention relates to a process for treating wastewater by biologically treating organic wastewater containing nitrogenous components.

BACKGROUND ART

Problems such as eutrophication caused by inflow of nitrogenous components contained in wastewater to the sea and a lake have been solved by a variety of processes for biologically treating nitrogenous components.

A large portion of nitrogenous components contained in wastewater such as sewage is comprised of ammonia nitrogen ($NH_4$-N). In practical treatment of sewage, $NH_4$-N is converted to nitrogen oxides (NOx-N) under an aerobic condition. The conversion is sometimes referred to as "nitrification reaction" or "nitrification". Then, NOx-N generated by the nitrification is converted to nitrogen gas ($N_2$) under an anoxic condition. The conversion is sometimes referred to as "denitrification reaction" or "denitrification". Then, nitrogen gas generated by the denitrification is discharged to remove nitrogenous components from the wastewater.

Patent Reference No. 1 has disclosed a process for treatment wherein an anoxic tank for denitrification and an aerobic tank for nitrification are sequentially arranged, and part of treated water discharged from the aerobic tank is returned to the anoxic tank.

The process described in Patent Reference No. 1 can use organic materials in an amount corresponding to a BOD of wastewater as a source for organic materials required for denitrification, so that a running cost can be reduced. However, the process has a disadvantage that since a part of nitric acid generated in a later aerobic tank remains in treated water, a total nitrogen (T-N) removal rate for the whole tank depends on a return ratio which is a ratio of a return flow rate to raw water. When a return ratio is R, a T-N removal rate (%) is $[R/(1+R)] \times 100$. Therefore, assuming that a return ratio (R) is 1, a T-N removal rate for the whole tank is at most 50 %. Thus, disadvantageously, the process cannot be used when a higher removal rate is required.

Patent Reference No. 2 has disclosed a treatment process wherein an aerobic tank and an anoxic tank are sequentially arranged and aerobic-tank treated water discharged from the aerobic tank is introduced to the anoxic tank for treatment. In this process, an aerobic tank and an anoxic tank are sequentially arranged, so that the maximum T-N removal rate is larger than that in the process described in Patent Reference No. 1. However, the process has a disadvantage that methanol is added as an organic material source to the anoxic tank, leading to a higher running cost.

PRIOR ART REFERENCES

Patent References

Patent Reference No. 1: JP 1996-257589A
Patent Reference No. 2: JP 1993-123696A

SUMMARY OF THE INVENTION

PROBLEMS TO BE SOLVED BY THE INVENTION

To solve the above problems, an objective of the present invention is to provide a process for treating wastewater wherein, for biologically treating organic wastewater containing nitrogenous components, treated water with good water quality is provided by the use of a considerably downsized treatment unit while reducing a running cost.

MEANS FOR SOLVING THE PROBLEMS

The above problems can be solved by providing a process for treating wastewater comprising biologically treating organic wastewater containing nitrogenous components by the use of a treatment unit in which a first aerobic tank, an anoxic tank, a second aerobic tank and a solid-liquid separator are sequentially arranged, comprising

    Step 1 of feeding 60 to 95 % of the organic wastewater to the first aerobic tank while feeding 5 to 40 % of the organic wastewater to the anoxic tank,

Step 2 of nitrifying and denitrifying the organic wastewater by bacteria supported on carriers in the first aerobic tank followed by discharging primary treated water,

Step 3 of denitrifying the organic wastewater and the primary treated water by bacteria in an activated sludge in the anoxic tank followed by discharging secondary treated water,

Step 4 of nitrifying the secondary treated water by bacteria in an activated sludge in the second aerobic tank followed by discharging tertiary treated water, and

Step 5 of separating the sludge from the tertiary treated water in the solid-liquid separator followed by discharging final treated water while returning the sludge to the anoxic tank.

Here, it is preferable that an $NH_4$-N volume load in the first aerobic tank is 0.1 kg/m$^3$•d or more. It is also preferable that in all of the first aerobic tank, the anoxic tank and the second aerobic tank, a hydraulic retention time is 4 hours or less.

It is also preferable that the carrier has continuous pores. It is also preferable that the carrier is a polyvinyl alcohol gel carrier.

EFFECTS OF THE INVENTION

In accordance with the present invention, bacteria supported on carriers in a first aerobic tank can perform nitrification and denitrification in the first aerobic tank to remove nitrogenous components contained in organic wastewater. Thus, a load in a later anoxic tank can be reduced, the anoxic tank can be downsized compared with the prior process and treated water with good water quality can be stably provided. Furthermore, in the treatment process of the present invention, a part of organic wastewater is fed not only to a first aerobic tank but also an anoxic tank, so that denitrification efficiency can be increased without adding an organic material such as methanol to the anoxic tank. Thus, denitrification efficiency in the anoxic tank can be increased while reducing a running cost.

BRIEF DESCRIPTION OF THE DRAWINGS

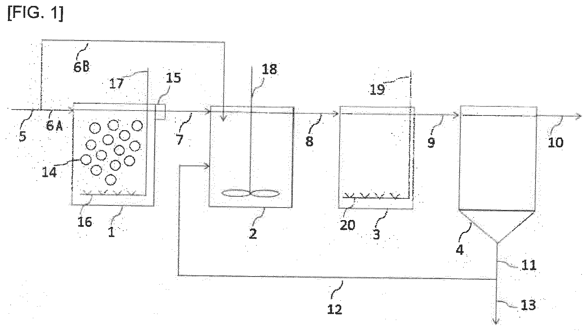

FIG. 1 is a process flow diagram illustrating an example of a treatment unit used in a treatment process of the present invention.

MODES FOR CARRYING OUT THE INVENTION

(Treatment unit)

The present invention relates to a process for treating wastewater by biologically treating organic wastewater containing nitrogenous components. An example of a treatment unit used in a treatment process of the present invention will be described with reference to the drawings. FIG. 1 is a process flow diagram illustrating an example of a treatment unit used in a treatment process of the present invention. The treatment unit shown in FIG. 1 consists of a first aerobic tank 1, an anoxic tank 2, a second aerobic tank 3 and a solid-liquid separator 4 in sequence. There will be described a treatment process of the present invention with reference to exemplary treatment of wastewater using this treatment unit.

(Step 1)

Step 1 in the present invention is feeding organic wastewater containing nitrogenous components (hereinafter, may be abbreviated as "wastewater") to a first aerobic tank and an anoxic tank. Step 1 will be described with reference to the treatment unit shown in FIG. 1. In this treatment unit, wastewater is introduced through a wastewater pipe 5 to the treatment unit. This wastewater pipe 5 is branched into wastewater feed pipes 6A and 6B in the middle. The wastewater feed pipe 6A feeds wastewater to the first aerobic tank 1 while the wastewater feed pipe 6B feeds wastewater to the anoxic tank 2. The wastewater can be any wastewater containing nitrogenous components including, but not limited to, for example sewage.

In Step 1, it is important that 60 to 95 % of the wastewater is fed to the first aerobic tank while 5 to 40 % of the wastewater is fed to the anoxic tank.

Feeding 60 to 95 % of the wastewater to the first aerobic tank means that a distribution ratio to the first aerobic tank as defined by formula (1) is 60 to 95 %.

$$(B/A) \times 100(\%) \qquad (1)$$

A: a total flow rate of wastewater [m$^3$/d]
B: a flow rate of wastewater fed to the first aerobic tank [m$^3$/d]

When a treatment unit shown in FIG. 1 is used, "a total flow rate of wastewater" means a flow rate corresponding to "a flow rate of wastewater fed through the wastewater pipe 5", and "a flow rate of wastewater fed to the first aerobic tank" means a flow rate corresponding to "a flow rate of wastewater fed through the wastewater pipe 6A to the first aerobic tank 1".

If a distribution ratio to the first aerobic tank is low, the amount of organic materials fed to the anoxic tank increases and thus the amount of T-N fed to the anoxic tank increases. Therefore, when a distribution ratio to the first aerobic tank is less than 60 %, T-N fed from the anoxic tank is nitrified in the second aerobic tank and then discharged without being denitrified, so that a T-N concentration in final treated water is too high to stably give final treated water with good water quality. A distribution ratio to the first aerobic tank is preferably 70 % or more, more preferably 80 % or more. On the other hand, when a distribution ratio to the first aerobic tank is high, the amount of organic materials fed to the anoxic tank decreases and thus a rate of the denitrification reaction in the anoxic tank is lowered. Therefore, if a distribution ratio to the first aerobic tank is more than 95 %, final treated water with good water quality in which a T-N concentration is low cannot be stably provided. A distribution ratio to the first aerobic tank is preferably 92.5 % or less, more preferably 90 % or less, further preferably 87.5 % or less.

Feeding 5 to 40 % of the wastewater to the anoxic tank means that a distribution ratio to the anoxic tank as defined by formula (2) is 5 to 40 %.

$$(C/A) \times 100 \ (\%) \qquad (2)$$

A: a total flow rate of wastewater [m$^3$/d]
C: a flow rate of wastewater fed to the anoxic tank [m$^3$/d]

When a treatment unit shown in FIG. 1 is used, "a total flow rate of wastewater" means a flow rate corresponding to "a flow rate of wastewater fed through the wastewater pipe 5", and "a flow rate of wastewater fed to the anoxic tank" means a flow rate corresponding to "a flow rate of wastewater fed through the wastewater pipe 6B to the anoxic tank 2".

If a distribution ratio to the anoxic tank is low, the amount of organic materials fed to the anoxic tank decreases and thus a rate of denitrification reaction in the anoxic tank decreases. Therefore, when a distribution ratio to the anoxic tank is less than 5 %, final treated water with good water quality in which a T-N concentration is low cannot be stably provided. A distribution ratio to the anoxic tank is preferably 7.5 % or more, more preferably 10 % or more, further preferably 12.5 % or more. On the other hand, as a distribution ratio to the anoxic tank increases, the amount of organic materials fed to the anoxic tank increases while the amount of T-N fed to the anoxic tank increases. Therefore, when a distribution ratio to the anoxic tank is more than 40 %, T-N fed from the anoxic tank is nitrified in the second aerobic tank and then discharged without being denitrified, so that a T-N concentration in final treated water is too high to stably give final treated water with good water quality. A distribution ratio to the anoxic tank is preferably 30 % or less, more preferably 20 % or less.

There are no particular restrictions to a method for regulating a distribution ratio to the first aerobic tank and a distribution ratio to the anoxic tank. For example, when the treatment unit shown in FIG. 1 is used, at the branching point of the wastewater feed pipes 6A and 6B, a regulation valve is installed to regulate a distribution ratio to the first aerobic tank and a distribution ratio to the anoxic tank. Here, a T-N concentration of wastewater flowing through the wastewater pipe 5 is continuously measured and when a T-N concentration is higher, a distribution ratio to the anoxic tank is regulated to be reduced.

(Step 2)

Step 2 in the present invention is nitrifying and denitrifying the organic wastewater by bacteria supported on carriers in the first aerobic tank followed by discharging a primary treated water. Bacteria capable of nitrification and bacteria capable of denitrification are supported on this carrier. In other words, nitrifying bacteria and denitrifying bacteria are supported on this carrier.

In Step 2, nitrifying bacteria supported on carriers nitrify NH$_4$-N in wastewater. Furthermore, NOx-N generated by nitrification is denitrified by denitrifying bacteria supported in an anoxic zone in a carrier to nitrogen gas. Whether bacteria capable of nitrification (nitrifying bacteria) are supported on carriers can be determined by the following method. Carriers are immersed in wastewater containing NH$_4$-N and then this wastewater is aerated. Here, when carriers support nitrifying bacteria, NH$_4$-N in the wastewater decreases while NOx-N increases. It can thus confirm that nitrifying bacteria are supported on carriers. Meanwhile, whether bacteria capable of denitrification (denitrifying bacteria) are supported on carriers can be determined by the following method. Carriers are immersed in wastewater containing NOx-N with a predetermined value of BOD, and then the wastewater is stirred. Here, when denitrifying bacteria are supported on carriers, NOx-N in the wastewater is reduced. It can thus confirm that denitrifying bacteria are supported on carriers. Furthermore, a FISH (Fluorescent In Situ Hybridization) method using a gene probe can confirm whether nitrifying bacteria or denitrifying bacteria are supported on a carrier.

A T-N removal rate in the first aerobic tank is preferably 10 % or more. The smaller a T-N removal rate is, the more the amount fed to the anoxic tank is. Thus, T-N which has not been treated in the anoxic tank and the next second aerobic tank may cause increase of a T-N concentration in final treated water. A T-N removal rate in the first aerobic tank is more preferably 20 % or more, further preferably 30 % or more.

Here, a T-N removal rate (%) in the first aerobic tank is a value as defined by formula (3).

$$[(D-E)/D] \times 100 \qquad (3)$$

D: a T-N load [kg/d] in a first aerobic tank by provided wastewater
E: the amount of T-N in primary treated water discharged from a first aerobic tank [kg/d]

An $NH_4$-N volume load in the first aerobic tank is preferably 0.1 kg/m$^3$·d or more. If a $NH_4$-N volume load is less than 0.1 kg/m$^3$·d, a large volume aerobic tank must be used, which is unfavorable in the light of downsizing of a treatment unit. An $NH_4$-N volume load is more preferably 0.15 kg/m$^3$·d or more, further preferably 0.2 kg/m$^3$·d or more. Meanwhile, an $NH_4$-N volume load in the first aerobic tank is preferably 1.6 kg/m$^3$·d or less. If an $NH_4$-N volume load is more than 1.6 kg/M$^3$·d, $NH_4$-N in the first aerobic tank may be insufficiently reduced. An $NH_4$-N volume load is more preferably 1.2 kg/m$^3$·d or less.

Here, an $NH_4$-N volume load [kg/M$^3$·d] is a value as defined by formula (4).

$$[(F \times G)/H]/1000 \qquad (4)$$

F: an $NH_4$-N concentration in wastewater [mg/L]
G: a flow rate of wastewater fed to a first aerobic tank [L/d]
H: a volume of a first aerobic tank [L]

A pH in the first aerobic tank is preferably 5.0 to 9.0. With a pH outside of this range, bacteria growth may be inhibited, leading to reduction of a nitrification rate and a denitrification rate. A pH is more preferably 5.5 or more, further preferably 6.0 or more. Meanwhile, a pH is more preferably 8.5 or less, further preferably 8.0 or less.

A temperature in the first aerobic tank is preferably 10 to 40 °C. At a temperature outside of the range, bacteria growth may become difficult, leading to reduction of a nitrification rate and a denitrification rate. A temperature is more preferably 20 °C or higher. Meanwhile, a temperature is more preferably 35 °C or lower.

A DO (Dissolved Oxygen) in the first aerobic tank is preferably 0.5 to 7.0 mg/L. If a DO is less than 0.5 mg/L, a nitrification rate may be reduced. A DO is more preferably 1.0 mg/L or more, further preferably 2.0 mg/L or more. Meanwhile, if a DO is more than 7.0 mg/L, a denitrification rate may be reduced. A DO is more preferably 6.0 mg/L or less, further preferably 5.0 mg/L or less. A DO can be measured by an appropriate method such as a diaphragm electrode method.

In Step 2, treated water in the first aerobic tank is preferably aerated in the light of efficient reaction progress. Although there are no particular restrictions to a way of aeration, it is preferable that the first aerobic tank 1 is equipped with an air diffuser 16 to which air pipe 17 is connected as shown in FIG. 1. Thus, treated water in the first aerobic tank 1 can be aerated by air from the air diffuser 16 while treated water and carriers can be sufficiently fluidized. When it is needed to further improve fluidity of carriers, treated water can be stirred by a stirrer or the like. It is also preferable to install a screen 15 at an outlet of the first aerobic tank as showing in FIG. 1, for preventing leakage of carriers.

A volume percent of carriers to a tank volume (filling rate) can be appropriately determined, depending on an $NH_4$-N concentration in wastewater and a flow rate. A higher filling rate of carriers can allow nitrification reaction and denitrification reaction to more efficiently proceed, but with an excessively high filling rate, fluidity of carriers may be reduced, leading to lower reaction efficiency. A filling rate is preferably 30 % or less, more preferably 25 % or less. Meanwhile, a filling rate is preferably 5 % or more in the light of stable treatment of wastewater in the first aerobic tank.

Carriers used in the present invention preferably have pores continuing from the surface to the interior (continuous pores). Here, "continuous" pores means that pores are not separately formed, but communicate with each other.

Continuous pores can be checked by observing carriers using an electron microscope.

A dissolved oxygen (DO) concentration in a continuous pore varies, depending on a distance from a carrier surface. Thus, a carrier surface under aerobic conditions supports nitrifying bacteria while a carrier interior under anoxic conditions supports denitrifying bacteria. A continuous pore preferably has such a pore size that only bacteria can live in a carrier interior. A pore size around a carrier surface is preferably 0.1 to 100 $\mu$m. If a pore size is less than 0.1 $\mu$m, bacteria may not enter a carrier interior. A pore size around a surface is more preferably 0.5 $\mu$m or more. Meanwhile, if a pore size around a surface is more than 100 $\mu$m, bigger organisms other than bacteria may enter, leading to reduction in a nitrification rate or a denitrification rate. A pore size is more preferably 50 $\mu$m or less. A pore size of a continuous pore can be determined by an appropriate method such as observation using an electron microscope.

There are no particular restrictions to the type of carriers used in the present invention. In view of high affinity for bacteria and good bacterium livability, a carrier is preferably a polymer gel carrier, more preferably a polyvinyl alcohol gel carrier (PVA gel carrier). A PVA gel carrier can support many bacteria, allowing for stable treatment with a short Hydraulic Retention Time (HRT). Among others, a PVA gel carrier having continuous pores is preferably adopted.

In contrast to a foam product such as a sponge, a PVA gel carrier does not easily discharge water even when it is deformed by an external force, and therefore, can provide an environment suitable for bacteria living. The water content of a PVA gel carrier is preferably 70 % by mass or more. The water content is more preferably 80 % by mass or higher, further preferably 90 % by mass or more. Meanwhile, if the water content may be more than 98 % by mass, strength of a PVA gel carrier may be reduced. The water content is more preferably 96 % by mass or less.

A sphere-equivalent diameter of a carrier is preferably 1 to 10 mm. If a sphere-equivalent diameter is small, a screen, which is installed for preventing leakage of carriers in a first aerobic tank, must have a small mesh, probably leading to clogging. A sphere-equivalent diameter is preferably 2 mm or more. Meanwhile, if a sphere-equivalent diameter is more than 10 mm, fluidity of carriers may be reduced. A sphere-equivalent diameter is preferably 6 mm or less. Here, a sphere-equivalent diameter means a diameter of a sphere having a volume equal to a particle volume.

There are no particular restrictions to a shape of a carrier, which can have any shape such as cube, cuboid, cylinder, sphere and macaroni shape. Among these, a sphere is preferable in the light of contact efficiency with bacteria.

Preferably, a carrier has a specific gravity slightly higher than that of water so that the carrier can drift in the first aerobic tank to such an extent that the carrier does not leak from the first aerobic tank. In a treatment process of the present invention, the use of carriers with a specific gravity slightly higher than that of water allows for stably treating wastewater, preventing leakage of the carriers. Based on this point of view, a specific gravity of a carrier is preferably 1.001 or more, more preferably 1.005 or more. Meanwhile, it is preferably 1.2 or less, more preferably 1.1 or less, further preferably 1.05 or less.

A PVA gel carrier in the present invention can be an acetalized PVA gel carrier in the light of the fact that the retaining amount of bacteria can be increased and that durability in repeated use can be ensured.

(Step 3)

Step 3 in the present invention is denitrifying the organic wastewater and the primary treated water by bacteria in an activated sludge in an anoxic tank followed by discharging secondary treated water. In Step 3, NOx-N contained in the primary treated water is denitrified to be converted to nitrogen gas by denitrifying bacteria in the presence of organic materials contained in wastewater. Here, endogenous denitrification in an activated sludge can simultaneously proceed. Thus, nitrogen is removed from a mixture of primary treated water and wastewater. Furthermore, carriers supporting denitrifying bacteria can be added to an anoxic tank, for additional denitrification.

A pH in an anoxic tank is preferably 5.0 to 9.0. With a pH outside of this range, growth of denitrifying bacteria may be inhibited, leading to reduction of a denitrification rate. The pH is more preferably 5.5 or more, further preferably 6.0 or more. Meanwhile, the pH is more preferably 8.5 or less, further preferably 8.0 or less.

A temperature in an anoxic tank is preferably 10 to 40 °C. At a temperature outside of this range, growth of denitrifying bacteria may become difficult, leading to reduction of a denitrification rate. The temperature is more preferably 20 °C or higher. Meanwhile, the temperature is more preferably 35 °C or less.

An Oxidation Reduction Potential (ORP) in an anoxic tank is preferably

- 100 mV or less. If an ORP is more than -100 mV, denitrifying bacteria may be inactivated, leading to reduction of a T-N removal rate. An ORP is more preferably
- 150 mV or less. An ORP can be measured by, for example, a method using a potential difference measuring device.

A DO (Dissolved Oxygen) in an anoxic tank is preferably 0.2 mg/L or less. If a DO is more than 0.2 mg/L, a denitrification rate may be reduced. A DO is preferably 0.1 mg/L or less, further preferably 0.05 mg/L or less. A DO can be measured by an appropriate method such as a diaphragm electrode method.

An activated sludge concentration in an anoxic tank (MLSS: Mixed Liquor Volatile Suspended Solid) is preferably 1000 to 8000 mg/L. If an MLSS is less than 1000 mg/L, a denitrification rate may be reduced. An MLSS is more preferably 2000 mg/L or more, further preferably 3000 mg/L or more. Meanwhile, if an MLSS is more than 8000 mg/L, solid-liquid separation in a later solid-liquid separator may become difficult. An MLSS is preferably 6000 mg/L or less, further preferably 5000 mg/L or less.

(Step 4)

Step 4 in the present invention is nitrifying the secondary treated water by bacteria in an activated sludge in the second aerobic tank followed by discharging tertiary treated water. In this step, $NH_4$-N contained in the secondary treated water is converted to NOx-N. Furthermore, carriers supporting nitrifying bacteria can be added to a second aerobic tank, for additional nitrification.

A pH in the second aerobic tank is preferably 5.0 to 9.0. With a pH outside of this range, bacteria growth may be inhibited, leading to reduction of a nitrification rate. The pH is more preferably 5.5 or more, further preferably 6.0 or more. Meanwhile, the pH is 8.5 or less, further preferably 8.0 or less.

A temperature in a second aerobic tank is preferably 10 to 40 °C. At a temperature outside of this range, bacteria growth may become difficult, leading to reduction of a nitrification rate. A temperature is more preferably 20 °C or higher. Meanwhile, a temperature is more preferably 35 °C or lower.

A DO in a second aerobic tank is preferably 0.5 to 7.0 mg/L. If a DO is less than 0.5 mg/L, a nitrification rate may be reduced. A DO is more preferably 1.0 mg/L or more, further preferably 2.0 mg/L or more. Meanwhile, if a DO is more than 7.0 mg/L, an activated sludge may be decomposed, leading to increase of a T-N concentration in final treated water. A DO is more preferably 6.0 mg/L or less, further preferably 5.0 mg/L or less. A DO can be measured by an appropriate method such as a diaphragm electrode method.

An MLSS in a second aerobic tank is preferably 1000 to 8000 mg/L. If an MLSS is less than 1000 mg/L, a nitrification rate may be reduced. An MLSS is more preferably 2000 mg/L or more, further preferably 3000 mg/L or more. Meanwhile, if an MLSS is more than 8000 mg/L, solid-liquid separation in a later solid-liquid separator may become difficult. An MLSS is preferably 6000 mg/L or less, further preferably 5000 mg/L or less.

In Step 4, treated water in the second aerobic tank is preferably aerated in the light of efficient reaction progress. Although there are no particular restrictions to a way of aeration, it is preferable that the second aerobic tank 3 is equipped with an air diffuser 20 to which air pipe 19 is connected as shown in FIG. 1. Thus, treated water in the second aerobic tank 3 can be aerated by air from the air diffuser 20 while treated water can be sufficiently fluidized. Furthermore, treated water can be stirred by a stirrer (unshown).

(Step 5)

Step 5 in the present invention is, in the solid-liquid separator, separating the sludge from the tertiary treated water followed by discharging final treated water while returning the sludge to the anoxic tank. Here, the sludge can be returned not only to the anoxic tank, but also to the second aerobic tank. When the sludge is returned to the first aerobic tank, the sludge returned may cause reduction of bacteria supported on carriers. Therefore, returning the sludge to the first aerobic tank is undesirable.

Here, there are no particular restrictions to a solid-liquid separator used in Step 5 as long as it can separate a liquid from a solid; for example, a settling tank. In the settling tank, an activated sludge settles; thus the activated sludge is separated from a supernatant; and the settled activated sludge is returned to an anoxic tank as a returned sludge while the supernatant is discharged as final treated water to the outside of the system. The solid-liquid separator used in Step 5 can be a membrane separation device.

In the present invention, an HRT in all of the first aerobic tank, the anoxic tank and the second aerobic tank is preferably 4 hours or less. In the light of downsizing the tanks, an HRT in all of the first aerobic tank, the anoxic tank and the second aerobic tank is preferably 3 hours or less. Meanwhile, an HRT in all of the first aerobic tank, the anoxic tank or the second aerobic tank is preferably 0.5 hours or more. If an HRT in any of the first aerobic tank, the anoxic tank and the second aerobic tank is less than 0.5 hours, a load may be too high to conduct treatment. An HRT in all of the first aerobic tank, the anoxic tank and the second aerobic tank is more preferably 1 hour or more.

EXAMPLES

There will be detailed the present invention with reference to Examples and Comparative Examples, but the present invention is not limited to these examples.

Example 1

Using a treatment unit shown in FIG. 1, organic wastewater containing nitrogenous components was biologically treated.

(Organic wastewater)

As organic wastewater to be biologically treated, artificial sewage having the following composition was used.
BOD: 125 mg/L, T-N concentration: 25 mg/L, SS (Suspended Solids) concentration: 100 mg/L, $NH_4$-N concentration: 25 mg/L

(Carrier)

In the first aerobic tank 1, 0.8 L of carriers 14 were installed. The carriers 14 installed were polyvinyl alcohol gel carriers (PVAgel "Kuragel" from Kuraray Co., Ltd.). The carriers 14 were spherical with a sphere-equivalent diameter of 4 mm, specific gravity of 1.025 and the water content of 93 % by mass. By electron microscopy of the surface of the carriers, mutually continuous pores were observed. Furthermore, from the electron micrograph obtained, a pore size around the surface of the carriers was determined to be 0.5 to 20 $\mu$m. Here, for non-circular pores, a pore size was a sphere-equivalent diameter.

(Treatment unit)

The treatment unit shown in FIG. 1 comprises the first aerobic tank 1, the anoxic tank 2, the second aerobic tank 3 and the solid-liquid separator 4. These tanks are arranged in this order.

- First aerobic tank

The first aerobic tank 1 (aerobic carrier tank) has a volume of 4 L. The first aerobic tank 1 is equipped with an air diffuser 16 on its bottom, and treated water in the tank is aerated by the air fed through an air pipe 17. Furthermore, a screen 15 is installed at the outlet for preventing leakage of the carriers 14.
In the first aerobic tank 1, the carriers 14 mentioned above are placed. Furthermore, as shown in FIG. 1, a wastewater pipe 5 is branched into wastewater feed pipes 6A and 6B in the middle, and the wastewater feed pipe 6A feeds wastewater to the first aerobic tank 1. Then, the wastewater fed to the first aerobic tank 1 is nitrified and denitrified by bacteria supported on the carriers in the tank. The wastewater after nitrification and denitrification is fed as primary treated water through a connecting pipe 7 to the anoxic tank 2.
Table 1 describes the control conditions in the first aerobic tank 1. As described in Table 1, a pH in the first aerobic tank 1 was 6.2, a DO was 4.4 mg/L, an ORP was 100 mV, and a tank temperature was 30 °C. Furthermore, an HRT in the first aerobic tank 1 was 2 hours.

- Anoxic tank

A volume of the anoxic tank 2 (anoxic activated sludge tank) is 4 L. The anoxic tank 2 is equipped with a stirrer 18, which stirs treated water in the tank. Furthermore, as shown in FIG. 1, the wastewater pipe 5 is branched into wastewater feed pipes 6A and 6B in the middle, and then the wastewater is fed through the wastewater feed pipe 6B to the anoxic tank 2. The wastewater and the primary treated water fed to the anoxic tank 2 were denitrified by bacteria in an activated sludge. The wastewater and the primary treated water after denitrification are fed as the secondary treated water through a connecting pipe 8 to the second aerobic tank 3.
Table 1 describes the control conditions in the anoxic tank 2. As described in Table 1, a pH in the anoxic tank 1 was 6.2, a DO was 0.0 mg/L, an ORP was -180 mV, a tank temperature was 30 °C, and an MLSS was 3900 mg/L. An HRT in the anoxic tank 2 was 2 hours.

- Second aerobic tank

A volume of a second aerobic tank 3 (aerobic activated sludge tank) is 2 L. The second aerobic tank 3 is equipped with an air diffuser 20 on the bottom, and treated water in the tank is aerated by the air fed through an air pipe 19.
The secondary treated water fed to the second aerobic tank 3 is nitrified by bacteria in the activated sludge. The secondary treated water after nitrification is fed as tertiary treated water through a connecting pipe 9 to the solid-liquid separator 4.

Table 1 describes the control conditions in the second aerobic tank 3. As described in Table 1, a pH in the second aerobic tank 2 was 6.2, a DO was 3.7 mg/L, an ORP was 140 mV, a tank temperature was 30 °C, and an MLSS was 3800 mg/L. An HRT in the second aerobic tank 3 was 1 hour.

- Solid-liquid separator

A solid-liquid separator 4 is a settling tank with a volume of 5 L. In the settling tank, a solid contained in the tertiary treated water was settled to separate a supernatant. Then, the supernatant was discharged from a treated-water pipe 10 to the outside as final treated water. This settling tank is equipped with a sludge pipe 11 in the lower part. This sludge pipe 11 is branched into a returned-sludge pipe 12 and a sludge discharge pipe 13. Part of a precipitate (sludge) depositing in the settling tank was returned through the returned-sludge pipe 12 to the anoxic tank 2.

[Table 1]

|  | First aerobic tank | Anoxic tank | Second aerobic tank |
|---|---|---|---|
| Tank volume (L) | 4 | 4 | 2 |
| pH | 6.2 | 6.2 | 6.2 |
| DO (mg/L) | 4.4 | 0.0 | 3.7 |
| ORP (mV) | 100 | -180 | 140 |
| Temperature (°C) | 30 | 30 | 30 |
| MLSS (mg/L) | - | 3900 | 3800 |
| HRT (hour) | 2 | 2 | 1 |

Using the treatment unit described above, the above organic wastewater was biologically treated. The operation conditions of the whole treatment unit and the results of treatment under the operation conditions are shown below.

(Operation conditions)

As described in Table 3, a flow rate of the wastewater flowing the wastewater pipe 5 is 48 L/d. Regulating valves (unshown), a flow rate of the wastewater fed through the wastewater feed pipe 6A to the first aerobic tank 1 was adjusted to 38.4 L/d and a flow rate of the wastewater fed through the wastewater feed pipe 6B to the anoxic tank 2 was adjusted to 9.6 L/d. Here, a T-N load of the wastewater fed to the first aerobic tank was 0.00096 kg/d.

(Results)

Water quality of the primary treated water discharged from the first aerobic tank 1 was examined, and a T-N amount in the primary treated water was 0.000576 kg/d and a T-N removal rate in the first aerobic tank 1 was 40 %. Furthermore, water quality of the final treated water discharged from the treatment unit was examined, and a T-N concentration in the final treated water was 6 mg/L. Here, general regulatory value (an allowable limit) of a T-N concentration in an enclosed water area in Japan is 10 mg/L. As described above, the T-N concentration in the final treated water of this example was not more than the regulatory value. An $NH_4$-N concentration was 2 mg/L and an SS concentration was 8 mg/L. The results are shown in Table 3.

Example 2

Wastewater was treated as described in Example 1, except that a flow rate of wastewater fed through the wastewater feed pipe 6A to the first aerobic tank 1 was 43.2 L/d and a flow rate of wastewater through the wastewater feed pipe 6B to the anoxic tank 2 was 4.8 L/d. As a result, a T-N removal rate in the first aerobic tank was 40 %. In the final treated water, a T-N concentration was 8 mg/L, which was not more than the regulatory value mentioned above. An $NH_4$-N concentration was 2 mg/L and an SS concentration was 12 mg/L. The results are shown in Table 3.

Comparative Example 1

Wastewater was treated as described in Example 1, except that wastewater was fed only to the first aerobic tank 1, but not to the anoxic tank 2. As a result, a T-N removal rate in the first aerobic tank was 40 %. In the final treated water, a T-N concentration was 15 mg/L, which was more than the regulatory value mentioned above. An $NH_4$-N concentration was 2 mg/Land an SS concentration was 20 mg/L. The results are shown in Table 3.

Comparative Example 2

Wastewater was treated as described in Example 1, except that a flow rate of wastewater fed through the wastewater feed pipe 6A to the first aerobic tank 1 was 24 L/d and a flow rate of wastewater fed through the wastewater feed pipe 6B to the anoxic tank 2 was 24 L/d. As a result, a T-N removal rate in the first aerobic tank was 40 %. In the final treated water, a T-N concentration was 15 mg/L, which was more than the regulatory value mentioned above. An $NH_4$-N concentration was 12 mg/L and an SS concentration was 10 mg/L. The results are shown in Table 3.

Comparative Example 3

Wastewater was treated as described in Example 1, except that a sludge from the settling tank was returned to the first aerobic tank 1. As a result, a T-N removal rate in the first aerobic tank was 30 %. In the final treated water, a T-N concentration was 12 mg/L, which was more than the regulatory value mentioned above. An $NH_4$-N concentration was 9 mg/L and an SS concentration was 30 mg/L. The results are shown in Table 3.

Comparative Example 4

Wastewater was treated as described in Example 1, except that the first aerobic tank 1 was installed with, instead of carriers, an activated sludge to provide the first aerobic tank 1 as an activated sludge tank while a sludge from a settling tank was returned to this activated sludge tank, and the control conditions in the first aerobic tank 1 and the second aerobic tank 3 were changed to those described in Table 2. Here, the control conditions in the first aerobic tank 1, the anoxic tank 2 and the second aerobic tank 3 are shown in Table 2. As a result, a T-N removal rate in the first aerobic tank was 20 %. In the final treated water, a T-N concentration was 15 mg/L, which was more than the regulatory value mentioned above. An $NH_4$-N concentration was 10 mg/L and an SS concentration was 45 mg/L. The results are shown in Table 3.

[Table 2]

|  | First aerobic tank | Anoxic tank | Second aerobic tank |
|---|---|---|---|
| Tank volume (L) | 4 | 4 | 4 |
| pH | 6.2 | 6.2 | 6.2 |
| DO (mg/L) | 4.4 | 0 | 3.7 |
| ORP (mV) | 100 | -180 | 140 |
| Temperature (°C) | 30 | 30 | 30 |
| MLSS (mg/L) | 3850 | 3900 | 3800 |
| HRT (hour) | 2 | 2 | 1 |

[Table 3]

| | | Example 1 | Example 2 | Comparative Example 1 | Comparative Example 2 | Comparative Example 3 | Comparative Example 4 |
|---|---|---|---|---|---|---|---|
| Operation conditions | Type of a first aerobic tank | Aerobic carrier tank (PVA gel carrier tank) | | | | | Activated sludge tank |
| | Total flow rate of discharged water (L/d) | 48 | 48 | 48 | 48 | 48 | 48 |
| | Feeding amount of discharged water to a first aerobic tank (L/d) [*1] | 38.4 (80%) | 43.2 (90%) | 48 (100%) | 24 (50%) | 38.4 (80%) | 38.4 (80%) |
| | Feeding amount of discharged water to an anoxic tank (L/d) [*2] | 9.6 (20%) | 4.8 (10%) | 0 (0%) | 24 (50%) | 9.6 (20%) | 9.6 (20%) |
| | Total HRT | 5 | 5 | 5 | 5 | 5 | 5 |
| | Tank to which a sludge is returned | Anoxic tank | | | | First aerobic tank | |
| Results | T-N removal rate in a first aerobic tank (%) | 40 | 40 | 40 | 40 | 30 | 20 |
| | T-N concentration in final treated water (mg/L) | 6 | 8 | 15 | 15 | 12 | 15 |
| | $NH_4$-N concentration in final treated water (mg/L) | 2 | 2 | 2 | 12 | 9 | 10 |
| | SS concentration in final treated water (mg/L) | 8 | 12 | 20 | 10 | 30 | 45 |

*1): A figure in parentheses is a distribution ratio to a first aerobic tank.
*2): A figure in parentheses is a distribution ratio to an anoxic tank.

When the first aerobic tank 1 was an activated sludge tank in the treatment unit in which the first aerobic tank 1, the anoxic tank 2, the second aerobic tank 3 and the solid-liquid separator 4 were sequentially arranged, a T-N concentration in the final treated water was more than the regulatory value (Comparative Example 4). Furthermore, when sludge in the solid-liquid separator 4 was returned not to the anoxic tank 2 but to the first aerobic tank 1, a T-N concentration in the final treated water was more than the regulatory value (Comparative Example 3).

In contrast, when the first aerobic tank 1 installed with carriers supporting bacteria capable of nitrification and denitrification was used and wastewater was fed to the first aerobic tank 1 and the anoxic tank 2 while a sludge was returned to the anoxic tank 3, a T-N concentration in the final treated water was not more than the regulatory value (Examples 1 and 2). Here, it was found that, in feeding wastewater to the first aerobic tank 1 and the anoxic tank 2, if the feeding amounts of the wastewater did not meet the predetermined values, a T-N concentration in the final treated water became more than the regulatory value (Comparative Examples 1 and 2).

EXPLANATION OF LETTERS OR NUMERALS

| | |
|---|---|
| 1: | First aerobic tank |
| 2: | Anoxic tank |
| 3: | Second aerobic tank |
| 4: | Solid-liquid separator |
| 5: | Wastewater pipe |
| 6A, 6B: | Wastewater feed pipe |
| 7, 8, 9: | Connecting pipe |
| 10: | Treated-water pipe |
| 11: | Sludge pipe |
| 12: | Returned-sludge pipe |
| 13: | Sludge discharge pipe |
| 14: | Carrier |
| 15: | Screen |
| 16, 20: | Air diffuser |
| 17, 19: | Air pipe |
| 18: | Stirrer |

**Claims**

1. A process for treating wastewater comprising biologically treating organic wastewater containing nitrogenous components by the use of a treatment unit in which a first aerobic tank, an anoxic tank, a second aerobic tank and a solid-liquid separator are sequentially arranged, comprising
Step 1 of feeding 60 to 95 % of the organic wastewater to the first aerobic tank while feeding 5 to 40 % of the organic wastewater to the anoxic tank,
Step 2 of nitrifying and denitrifying the organic wastewater by bacteria supported on carriers in the first aerobic tank followed by discharging primary treated water,
Step 3 of denitrifying the organic wastewater and the primary treated water by bacteria in an activated sludge in the anoxic tank followed by discharging secondary treated water,
Step 4 of nitrifying the secondary treated water by bacteria in an activated sludge in the second aerobic tank followed by discharging tertiary treated water, and
Step 5 of separating the sludge from the tertiary treated water in the solid-liquid separator followed by discharging final treated water while returning the sludge to the anoxic tank.

2. The process for treating wastewater as claimed in Claim 1, wherein an $NH_4$-N volume load in the first aerobic tank is 0.1 kg/m$^3$•d or more.

3. The process for treating wastewater as claimed in Claim 1 or 2, wherein in all of the first aerobic tank, the anoxic tank and the second aerobic tank, a hydraulic retention time is 4 hours or less.

4. The process for treating wastewater as claimed in any of Claims 1 to 3, wherein the carrier has continuous pores.

5. The process for treating wastewater as claimed in any of Claims 1 to 4, wherein the carrier is a polyvinyl alcohol gel carrier.

[FIG. 1]

## INTERNATIONAL SEARCH REPORT

| | International application No. |
|---|---|
| | PCT/JP2019/015897 |

A. CLASSIFICATION OF SUBJECT MATTER
Int. Cl. C02F3/34(2006.01)i, C02F3/10(2006.01)i, C02F3/12(2006.01)i

According to International Patent Classification (IPC) or to both national classification and IPC

B. FIELDS SEARCHED

Minimum documentation searched (classification system followed by classification symbols)
Int. Cl. C02F3/34, C02F3/10, C02F3/12

Documentation searched other than minimum documentation to the extent that such documents are included in the fields searched
Published examined utility model applications of Japan    1922-1996
Published unexamined utility model applications of Japan  1971-2019
Registered utility model specifications of Japan          1996-2019
Published registered utility model applications of Japan  1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2014-124595 A (COSMO OIL CO., LTD.) 07 July 2014, claim 1, paragraphs [0024]-[0047], fig. 6 (Family: none) | 1-5 |
| Y | JP 2011-218345 A (METAWATER CO., LTD.) 04 November 2011, paragraphs [0024], [0025], fig. 1 (Family: none) | 1-5 |
| Y | JP 2001-089574 A (KURARAY CO., LTD.) 03 April 2001, abstract, claims 1, 11-13, paragraphs [0017], [0022], [0054]-[0057], fig. 6 & WO 2001/005877 A1 | 1-5 |
| A | JP 2007-105580 A (KURITA WATER INDUSTRIES LTD.) 26 April 2007 (Family: none) | 1-5 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29.05.2019 | 11.06.2019 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2019/015897

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-325988 A (NISHIHARA ENVIRONMENTAL SANITATION RESEARCH INSTITUTE INC.) 28 November 2000 (Family: none) | 1-5 |
| A | JP 2008-023485 A (ORGANO CORP.) 07 February 2008 (Family: none) | 1-5 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8257589 A

- JP 5123696 A